# EUROPEAN PATENT SPECIFICATION

(11) **EP 4 401 990 B1**
(45) Date of publication and mention of the grant of the patent: **18.02.2026**
(21) Application number: 22782688.0
(22) Date of filing: 09.09.2022
(51) Int. Cl.: B60B 27/00, F16D 55/228, F16D 65/00, F16D 65/18

(54) **BRAKING SYSTEM**
BREMSSYSTEM
SYSTÉME DE FREINAGE

(30) Priority: 14.09.2021 GB 202113128
(43) Date of publication of application: 24.07.2024
(73) Proprietor: AP Racing Limited, Coventry CV3 4LB (GB)
(72) Inventor: SIMMONDS, Jonathan, Leamington Spa, CV31 2SH (GB)
(74) Representative: Yip, Matthew Wing Yu
(86) International application number: PCT/EP2022/075092
(87) International publication number: WO 2023/041428

(56) References cited:
- WO-A1-2018/154502
- WO-A1-2020/128747
- GB-A- 2 304 837
- US-A1- 2018 223 926
- US-A1- 2020 080 603

## Description

The present invention relates to a braking system, and finds particular utility on performance or racing vehicles.

### Background

Generally, all motorized vehicles include a brake system. The brake system is typically attached to a support member, usually termed the knuckle, or the upright. The two terms may be used synonymously. The upright or knuckle attaches a wheel, brake disc, brake caliper, hub and steering arm to the vehicle. The upright also locates these components in space. Such an arrangement is known, and will not be described further.

A brake caliper comprises an inboard caliper section, located inside the brake disc, with respect to the vehicle, and an outboard caliper section, located on the outside of the brake disc. The inboard and the outboard calipers sections are connected via a central bridge section. Such arrangements are known.

Each of the inboard and outboard caliper sections typically houses one or more brake pistons. Said pistons are housed within bores in the inboard and outboard caliper sections. Under braking the pistons are forced against the brake disc. The action of the brake pistons squeezing the brake disc causes the braking action.

Braking systems can undergo significant stresses during use. This is particularly the case when said systems are utilized in performance cars, where high speeds and heavy braking are the norm.

Conventionally, brake calipers are mounted onto the support member on one side of the caliper, generally on the inboard side, via the inboard caliper section. This arrangement can be unsatisfactory for performance applications, as it can result in uneven deflection of the inboard and outboard caliper sections. Further, distortion of the caliper structure can result in relative movement of the two sections of the caliper under braking torque. This uneven deflection and distortion of the caliper structure can result in inefficient braking and uneven pad wear.

For example, both WO 2019/008534 A1 and WO 2020/128747 A1 show examples of a brake caliper with mountings on the inboard caliper section.

US 2020/080603 A1 discloses a hydraulic caliper assembly includes a caliper brake housing including two opposing pairs of two piston assemblies, each of the pairs of two piston assemblies adapted to place a respective stator assembly of a pair of stator assemblies in a braking position, where the caliper brake housing is a unitary, cast component having an internal fluid porting system fluidly coupling each of the piston assemblies with a source of hydraulic fluid, and where each of the piston assemblies have a common configuration.

It is desirable to overcome, or at least ameliorate these issues.

### Summary of the Invention

According to the present invention there is provided a braking system comprising a support member, a brake disc defining a disc mid-plane line, and a brake caliper comprising a bridge section, an inboard section and an outboard section, wherein the brake caliper is connected to the support member such that the joint there-between is close to the brake disc mid-plane so as to balance warping between the inboard caliper section and the outboard caliper section, wherein the brake caliper comprises two mounting points that are at either end of the bridge section, wherein a first is a leading mounting point, with respect to the forward direction of travel, and the second is a trailing mounting point, characterised that the secondary mounting point comprises a floating link.

Thus, it will be appreciated that the interface between the knuckle and the caliper mounting is close to the centre-line of the brake disc. Preferably the interface will be between 3 millimeters to 10 millimeters, and more preferably between 3 millimeters and 8 millimeters, from the centre-line of the brake disc. Typically the mounting interface will be no further from the disc mid-plane line than half the thickness of the brake disc plus four millimeters, and more preferably no further from the disc mid-plane line than half the thickness of the brake disc plus two millimeters.

Normally, the support member will be the knuckle or upright of the vehicle. Typically the support member and the brake caliper will comprise mounting points, typically fixing holes that can accommodate bolts, to allow the braking system to be fixed to the knuckle. The knuckle preferably comprises a plurality of support brackets (sometimes termed stantions).

It is desirable to maintain the brake pistons perpendicular with the surface of the brake disc. The warping of the caliper sections is often termed lift. This is a phenomenon that causes the brake pistons to come away from the surface of the brake disc, thus deleteriously affecting the operation of the braking system.

In the present arrangement, the fixing holes of the caliper are positioned in the central bridge section, rather than the inboard caliper section. Accordingly, the connection between the caliper and the upright is close to a line running through the mid-point of the brake disc (the disc mid-plane line). This arrangement advantageously balances distortion under braking of the inboard and outboard caliper sections. As the bending moment between the caliper mountings and disc centre-line is eliminated or reduced, an uneven distortion of the caliper structure under braking loads is significantly reduced. Thus, the lift phenomenon is much reduced.

It is preferred that the warping is limited to below a critical angle. The critical angle can be considered to be the point at which angular displacement of the bores in the inboard or outboard caliper sections begin to compromise the full area contact of the piston face on the disc. Thus, advantageously, the present arrangement balances lift (i.e. deflection or warping) between the two outer caliper sections, and maintains piston articulation within the critical angle. It is ideal to maintain a perpendicular relationship between brake pistons and the surface of the brake disc. Such an arrangement offers both performance and efficiency benefits. With conventional designs, where mountings are positioned in one side of the caliper, the majority of the lift takes place on the opposite half. Accordingly lift is more difficult to manage.

The critical angle is application specific: it will vary dependent upon the brake system in question. The critical angle will depend on factors such as the depth of the bores in which the brake pistons reside. Specifically, any given caliper assembly will have its own critical angle for the bore/piston, and its relationship with the brake disc. For some applications the critical angle may be below 5°, and more preferably below 3°. Even more preferably, the critical angle is kept below 1°. As specified, each caliper assembly will have its own critical angle based on the geometry of the assembly. For a performance road application, a typical critical angle value is below 0.5°, and may be, for example, 0.4°. The present arrangement minimises angular displacement of the bores in the inboard and outboard caliper sections, keeping the angular displacement close to zero, and not exceeding the critical angle.

It has been determined that a small amount of lift is permissible (i.e. up to the critical angle) without any detriment to performance. The present arrangement, by balancing the warping between the inboard and outboard caliper, provides a design that keeps the angle of brake pistons to the disc surface below this critical limit.

Once the critical angle is exceeded the drop off in braking performance is abrupt, with a proportional effect for each incremental increase after the critical angle.

The mounting points on the brake caliper are preferably at either end of the bridge section. It is preferred that the mounting points (typically fixing holes) are aligned axially with respect to the brake disc (and wheel hub). However, in an alternative arrangement, they may be arranged radially.

There are two mounting points. When considering the forward direction of travel, it is conventional to term the leading mounting point, with respect to the forward direction of travel, as the primary mounting point, and the trailing mounting point the secondary mounting point.

Preferably the mounting points are positioned beyond the outer circumference of the brake disc. Put another way, the mounting points are above the outer diameter of the brake disc. The combination of the mounting points positioned in this way, together with the mounting interface between the caliper and knuckle being close to the centre-line of the brake disc effectively balances the deflection between the inboard and outboard caliper sections during braking. Positioning the mountings in the extremities of the bridge has a beneficial effect in reducing lift in that it aids in the optimisation of the geometry for the floating mount, to counter the lift of the caliper halves when brake torque loadings are applied.

It is preferred that the leading or primary mounting point is rigidly fixed. Preferably this arrangement will comprise a substantially circular aperture at the rear of the bridge section to allow a bolt to pass there-through and connect to the knuckle.

The secondary or trailing mount comprises a floating link.

The floating mount may be configured in two ways. The first is with relative movement between the brake caliper and the knuckle. The second comprises a fixed connection between the caliper and the knuckle, and a mounting point on the knuckle that is operable to flex.

If configured for relative movement between the brake caliper and the knuckle, it is preferred that the trailing mounting point in the knuckle comprises an elongate aperture, typically in the direction of the primary axis of the brake caliper. Fixing means, such as a bolt or the like, may be engaged with the brake caliper via the elongate aperture. This floating link may therefore allow the brake caliper to flex under significant forces. In such an arrangement, it is preferred that the bolt is operable to co-operate with a bobbin, with said bobbin and bolt both being operable for relative movement in the elongate aperture.

A spacer may be provided between the brake caliper and the knuckle. Either or both of the spacer and the bobbin may comprise seals to engage with the knuckle. It will be appreciated that the knuckle could comprise one or more seals for engagement with either or both of the bobbin or spacer, but that from a convenience of manufacturing point of view it is preferred to locate the seals on the bobbin and/or spacer.

Preferably the knuckle comprises leading and trailing mounting brackets (or stantions). It is preferred that the trailing stantion is operable to flex. In this embodiment the secondary mount is rigidly fixed to the trailing mounting bracket, and the flex in the trailing stantion approximates the floating link.

The combination of providing a floating secondary mount with an interface between the knuckle and the caliper close to the brake disc centre-line is particularly effective at overcoming the earlier described problems. The 'lift' phenomenon is mitigated, and stretching, and inward distortion of the inboard and outboard calipers is controlled.

It is preferred that the knuckle is manufactured from aluminium or an alloy thereof. The knuckle may also been made from steel, or any other material that is operable to withstand the stresses and strains of braking a motor vehicle.

In particular, the combination of a floating (trailing) secondary mount and a fixed leading mount, together with an interface between the knuckle and central section being close to the centreline of the brake disc, most effectively alleviates 'lift'. The advantage is enhanced by a 'stretching' effect of the brake assembly, and subsequent reduction in width of the brake assembly when brake torque is applied. It is noted that this 'stretching' effect would be absent with a floating mount positioned in the conventional manner (i.e. not close to the centre-line of the brake disc). The 'stretching' effect is caused by the primary and secondary mountings being positioned at the extremities of the bridge section, as well as being as close as possible to the disc centreline.

In order that the present invention be more readily understood, specific embodiments thereof will now be described.

### Brief description of the drawings

Figure 1 shows a top view of a brake caliper according to a first embodiment.
Figure 2 shows a back view of the brake caliper of figure 1.
Figure 3 shows an inboard side view of the caliper of figure 1.
Figure 4a shows a cross-section of figure 3 along the connection line between the caliper and the knuckle.
Figures 4b and 4c show, respectively, detailing of the front and rear mounting points on the brake caliper.
Figures 5a, 5b, and 5c show a top view of the brake caliper emphasizing directions of forces.
Figure 6 shows a perspective view of the caliper of the first embodiment.
Figure 7 shows rear perspective view of the brake caliper of the first embodiment.
Figure 8 shows a rear view of the caliper mounted on the knuckle.
Figure 9 shows a variant to the embodiment of figure 6, with alternative mounting.
Figure 10 shows an example of a conventional mono-bloc radial mount brake caliper.
Figure 11 shows an example of a two-piece radial mount brake caliper.
Figure 12 shows a perspective view of a brake caliper mounted to a knuckle with a floating trailing mount according to a first embodiment.
Figure 13 shows a side view of the caliper and knuckle of figure 12.
Figure 14 shows a front view of the caliper and knuckle of figure 12.
Figure 15 shows a top view of the caliper and knuckle of figure 12.
Figure 16 shows a perspective cross-section of the trailing mount of the arrangement of figures 12 to 15.
Figure 17 shows a cross-section of the trailing mount of the arrangement of figures 12 to 15.
Figure 18 shows a cross-section through line x-x in figure 17.
Figure 19 shows a perspective view of a brake caliper mounted to a knuckle with a floating trailing mount according to a second embodiment.
Figure 20 shows a side view of the caliper and knuckle of figure 19.
Figure 21 shows a front view of the caliper and knuckle of figure 19.
Figure 22 shows a top view of the caliper and knuckle of figure 19.
Figure 23 shows a perspective cross-section of the trailing mount of the arrangement of figures 19 to 23.
Figure 24 shows a cross-section of the trailing mount of the arrangement of figures 19 to 23.
Figure 25 shows a cross-section through line x-x in figure 24.

### Description of preferred embodiments

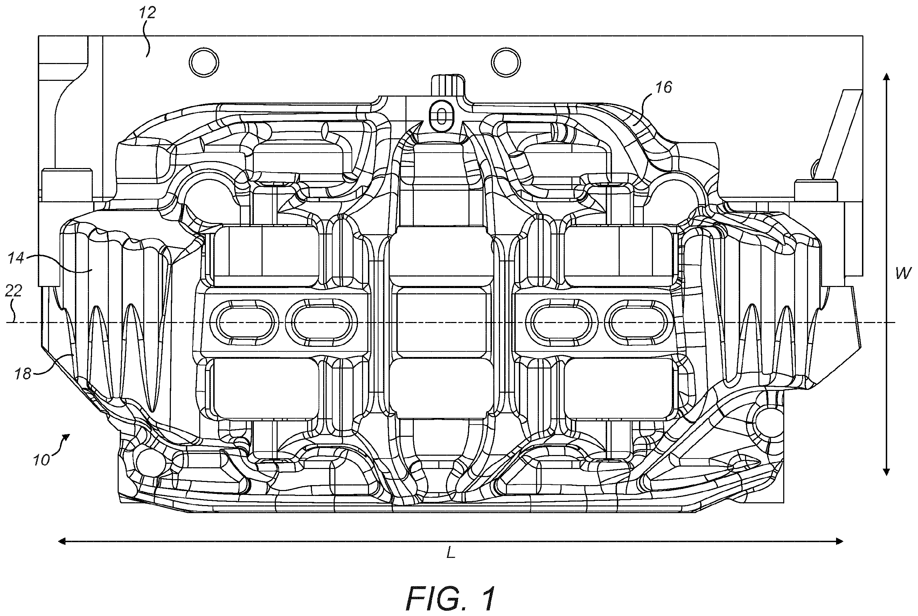

Figures 1 to 8 show a brake caliper 10 in accordance with a first embodiment of the present invention. Figure 1 shows a representation of the caliper 10 and support member 12 (sometimes referred to as a knuckle or an upright). Note that a brake disc is not shown in this figure.

The dimensions of the brake caliper 10 may be considered as length L, being the primary axis of the caliper, width W and height H. Clearly, these terms are relative, and are for understanding. Typically, a brake caliper is mounted to one side of a brake disc, so the primary axis runs in a substantially vertical direction.

The caliper 10 comprises a central bridge section 14 which connects an inboard caliper section 16 and an outboard caliper section 18. The central bridge section 14 comprises a first mounting point 28 at one end thereof, and a second mounting point 20 at the other end. As described in more depth below, the first and second mounting points 20, 28 are positioned beyond the outer circumference of the brake disc. Positioning the two mountings at the extremities of the bridge section has a beneficial effect in reducing lift because it aids in the optimisation of the geometry for the secondary mount thus countering the lift of the caliper halves when brake torque loadings are applied.

The inboard caliper section 16 and an outboard caliper section 18 each typically comprise one or more brake pistons that are operable, under action from brake fluid, to press inwardly to engage with a brake disc to cause the braking function. Such an arrangement is known, and will not be discussed further here.

Line 22 indicates where the centre line of a brake disc would be, when the caliper 10 was mounted in situ in a vehicle. This line may also be termed the brake disc mid-plane.

In conventional brake calipers, the inboard section 16 of the brake caliper is typically attached to the knuckle. When pressure is applied to such a conventional brake caliper, there is a tendency for the outboard side of the caliper (i.e. the section that is not bolted to the knuckle) to move away from the surface of the brake disc by pivoting around the bridge section. This movement or warping is known as 'lift' and results in a loss of perpendicularity between the axis of the pistons (or the bores in the outer sections in which the pistons reside) in the outer caliper section and the disc surface. The 'lift' phenomenon reduces the contact between the piston and pad, and can also change the centre of pressure. This can result in uneven pad wear and a general reduction in braking efficiency.

A small amount of lift is acceptable. Negligible consequences result from a small warping of a side section of a brake caliper 10. This small amount of lift is termed the critical angle, and is the angle created (from the perpendicular) between the face of the brake disc and the primary axis of the bores in the side caliper section.

Providing a centre mounted caliper balances the overall deflection and lift in the caliper evenly between the two sides of the caliper. Mounting the caliper to the upright via the central bridge 14 reduces, and in some scenarios even eliminates, the effect of lift on each of the inboard 16 and outboard 18 calipers, improving or eliminating pad taper, and improving braking efficiency. Such an arrangement is particularly important in racing vehicles.

The critical angle is dependent on the characteristics of individual brake assemblies. However, generally, it is preferred that the critical angle is no greater than 5°, and more preferably no greater than 3°, and even more preferably no greater than 1°. For certain racing applications the critical angle may be below 0.5°.

A resultant advantage is that less heavy caliper structures can be implemented. This is partly because the central bridge section 14 does not need to be so rigid. As described above, when the majority of lift takes place on one side of the caliper, the central bridge section 14 must be rigid to ensure that the critical angle is not exceeded. In the present arrangement, because the lift is balanced between the inboard and outboard sections, the critical angle allowance is effectively doubled, as each caliper side 16, 18 can lift by a given amount before the critical angle is exceeded. Therefore the overall body stiffness can be reduced, which offers weight saving potential.

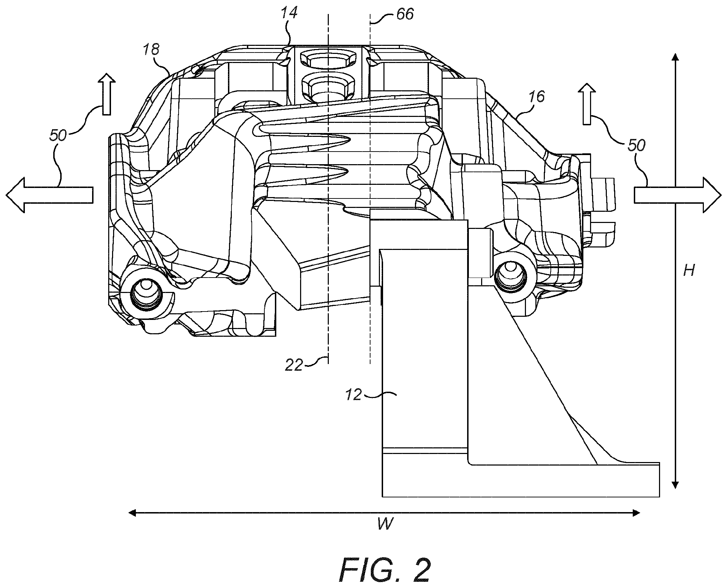

Figure 2 shows an end view of the brake caliper 10. The height H and width W axes are indicated. The proximity of the brake disc centre-line 22 and the interface between the knuckle and the central caliper section 14 is apparent. I tis preferred that the distance between the brake disc centre-line 22 and the interface is no more than half the thickness of the brake disc plus two millimeters.

Both axial deflection and 'lift' of inboard and outboard caliper sections 16, 18 is better balanced when the caliper is mounted on the central bridge section 14. Arrows 50 indicate the directions of deflection under braking load.

When the brake system is operated, the hydraulic pressure generated in the caliper bores applies a load to the brake pad and disc which in turn generates a reaction load which causes the caliper body to deflect (i.e. causes 'lift'). This deflection results in excessive fluid displacement and braking inefficiency. The present arrangement seeks to address this issue by providing an improvement in the mounting points.

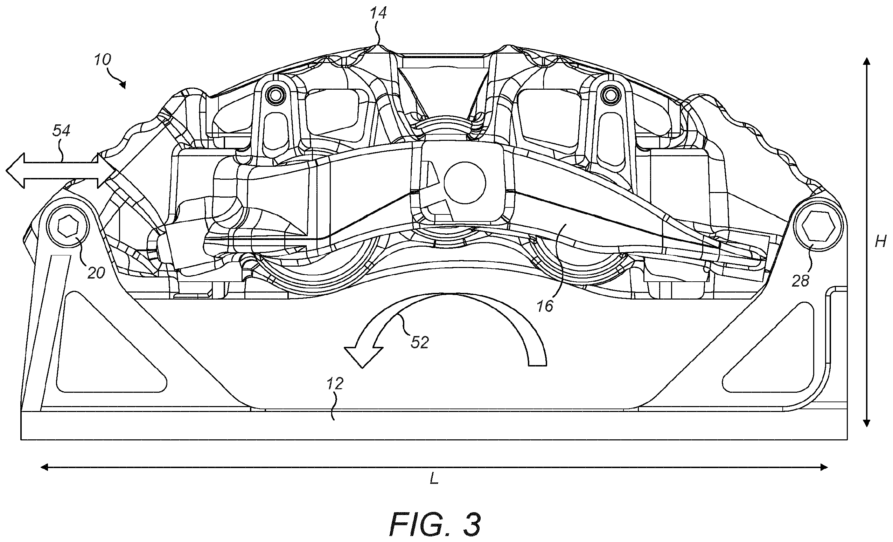

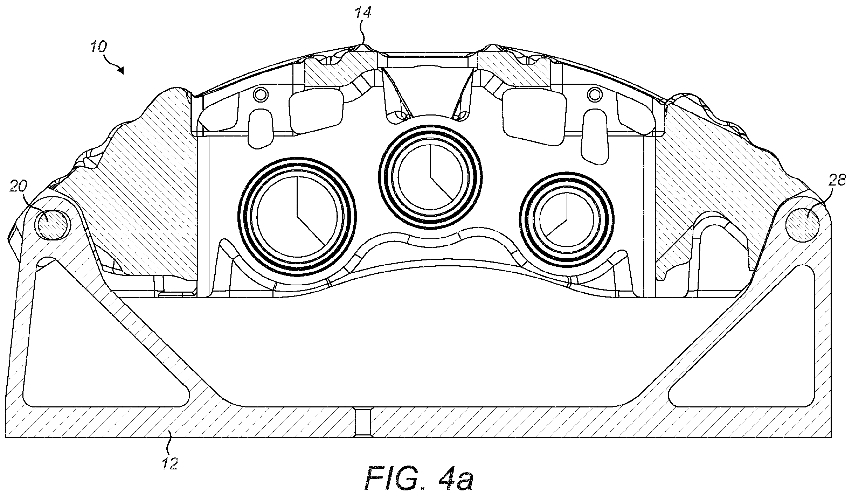

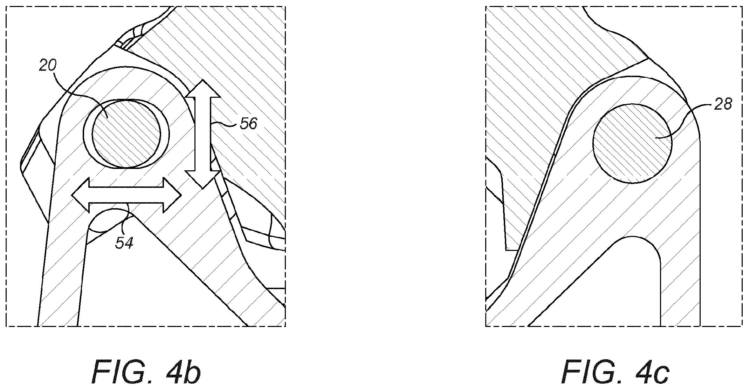

Details of the mounting points are shown in figures 3 and 4a to 4c. Figure 3 shows a side view of the brake caliper shown from the inboard side. For convenience, the length L and the height H are indicated. Arrow 52 shows the direction of rotation of the brake disc (when the vehicle is moving in the forward direction). The primary mount 28 comprises complimentary apertures on the knuckle and bridge section, typically with one or both comprising a screw thread to allow the two members to be bolted together. Figure 4c shows details of the arrangement.

The secondary mount 20 is shown in figure 4b. The aperture on the upright comprises is elongate along the same axis as the primary axis of the brake caliper. The mounting aperture provides a restrained fit in the perpendicular direction. Such an arrangement allows the caliper 10 to flex under heavy loads. Accordingly, it will be appreciated that the present arrangement utilises a fixed (rigidly bolted) primary mounting 28 on the leading end of the caliper, and a semi-floating secondary mounting 20 on the trailing end of the caliper (termed 'semi-floating', as the mounting is rigid in the Y and Z directions, and floats in the X direction). The provision of a floating secondary mount enhances the effect of mounting the caliper to the knuckle as close as possible to the centre-line of the brake disc. The present inventors have ascertained that it is the combination of the two features that provides the greatest advantage.

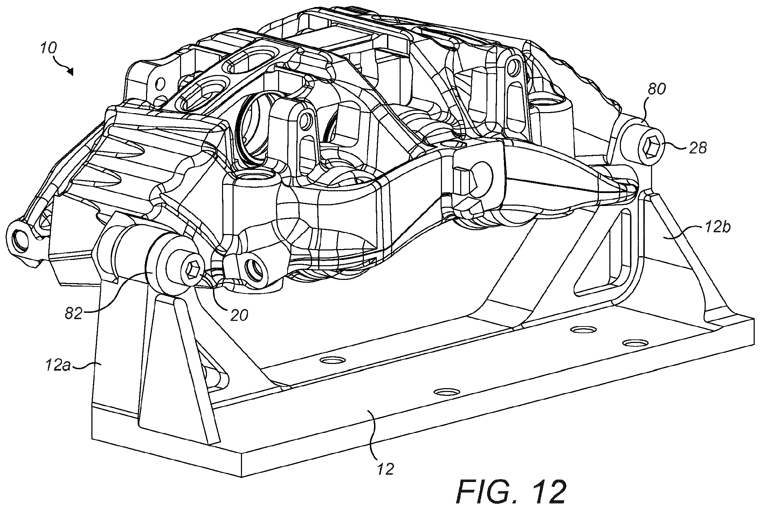

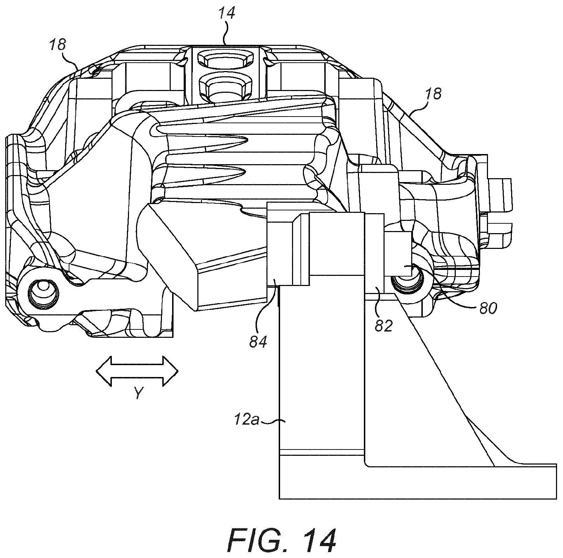

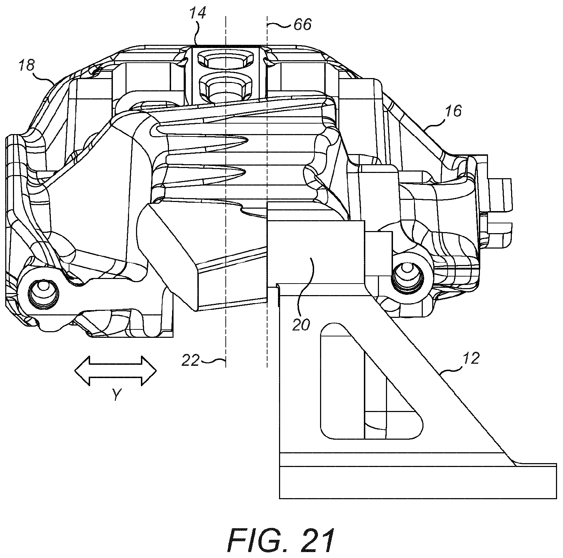

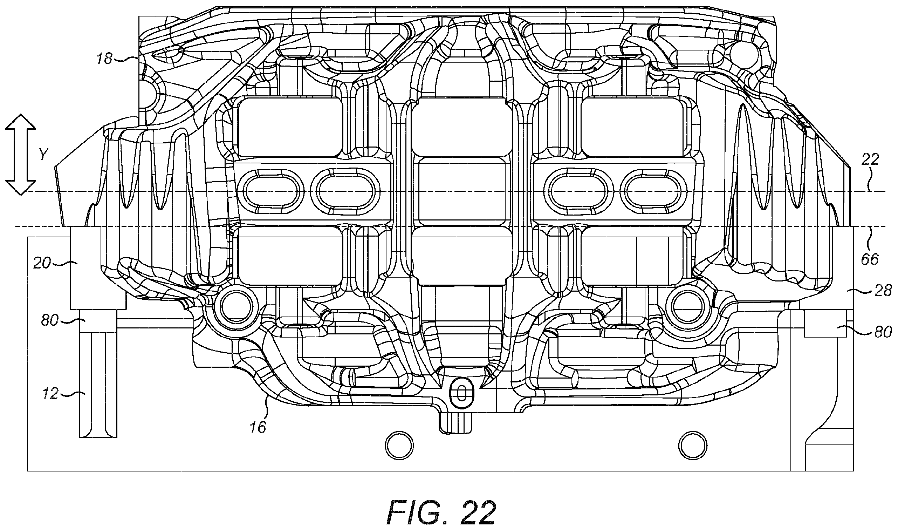

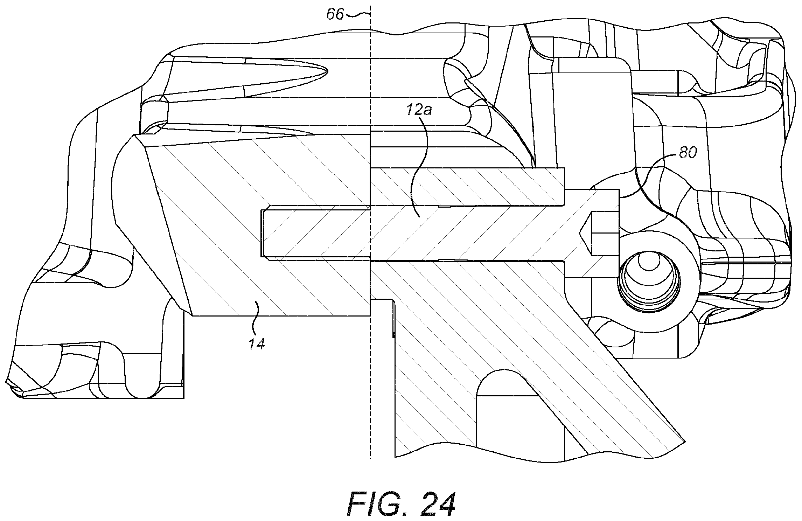

The floating mount may be implemented in a number of ways. A generic embodiment is shown in figure 4a. However, two additional embodiments for use with the present arrangement are also envisaged. These will be described in depth later with reference to figures 12 to 24.

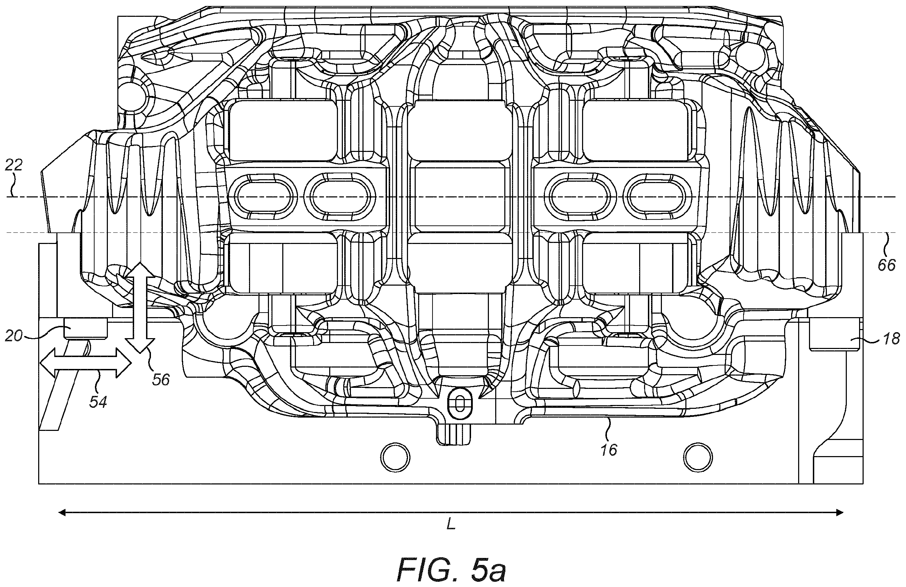

As is apparent from figures 3, 4b and 5a, the secondary mount is restrained in the Width W and Height H directions, and is floating in the Length L direction. Arrow 54 indicates the direction of float. Arrow 56 is shown in figures 4b and 5a, and emphasises the directions in which the secondary mounting is restrained.

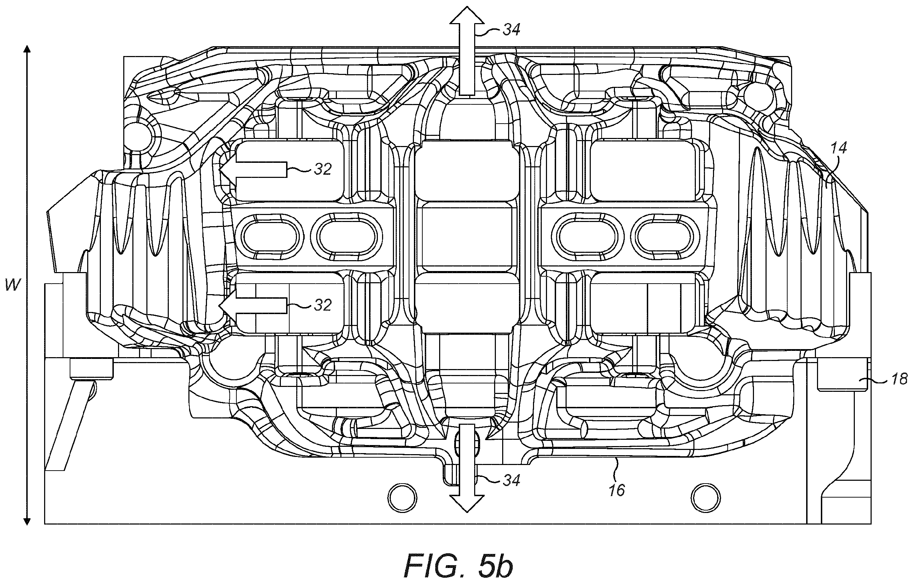

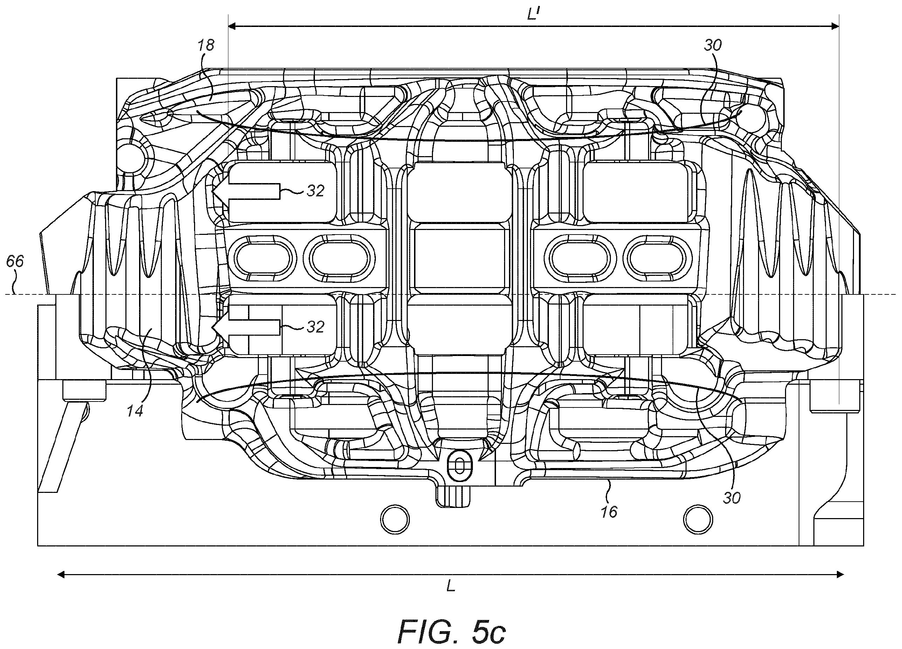

Figures 5b and 5c show the same aspect as figure 5a. These figures indicate the direction of brake torque force, and its effect on the brake caliper. The brake torque force acts on the trailing end of the caliper. This is represented visually by arrows 32. Arrows 34 indicate the direction of hydraulic piston reaction forces. As the secondary mount 20 of the caliper is not restrained longitudinally (i.e. along axis L), the brake torque force effectively stretches the caliper, increasing distance L'. The result of the elongation is a tendency for the sides of the caliper to distort inwards, towards the brake disc faces. A representation is shown by lines 30 in figure 5c. Thus, the torque forces (represented by arrows 32) cause deformation of the caliper, which creates an inward force, opposing the piston forces (represented by arrows 34). The reaction load of the pistons acting on the brake disc is greater than the inward load created by the distortion. The overall outward deflection of the caliper sections containing the pistons is however reduced by the positive effect of the floating mounting. This reduces the volumetric fluid consumption of the caliper, which in turn improves braking efficiency and brake pedal feel.

In the present arrangement the brake disc (not shown in the figures) comprises a disc with a given diameter, and hence a given circumference. The centre of the brake disc is co-axial with the centre of the wheel, and rotates in the same direction. The brake caliper 10 is mounted around the brake disc on the upright. The mounting points 20 and 28 are positioned outside of the circumference of the brake disc. Put another way, the distance from the centre of the brake disc to each of the mountings is greater than the diameter of the brake disc.

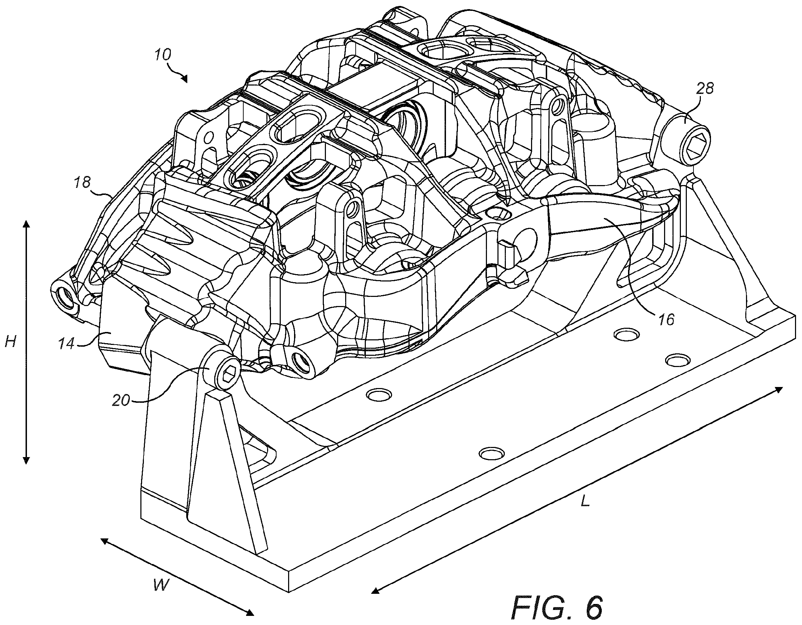

Figure 6 shows a perspective view of the brake caliper 10 and the knuckle 12. The primary and secondary mounts are aligned so to be parallel with the axially direction of the brake disc and vehicle axle. The mounting bolts, both fixed and floating are coaxial with the piston bore axes. This arrangement offers advantages in terms of space-saving within the vehicle wheel area.

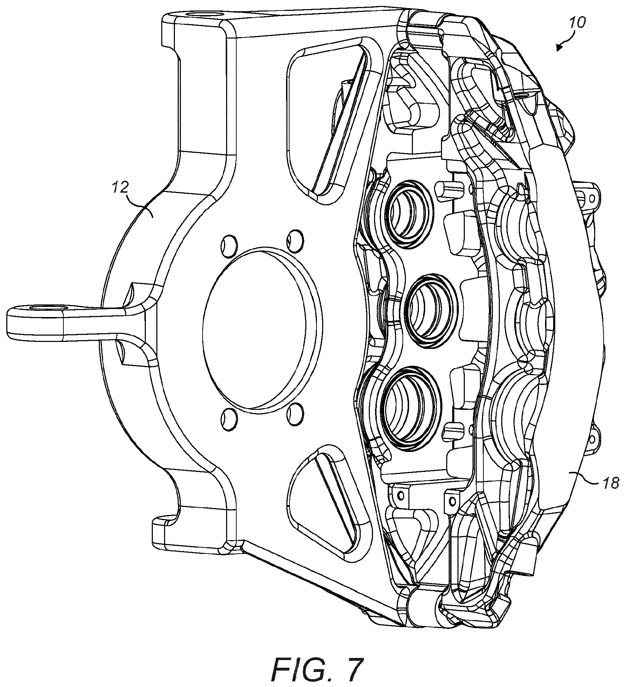

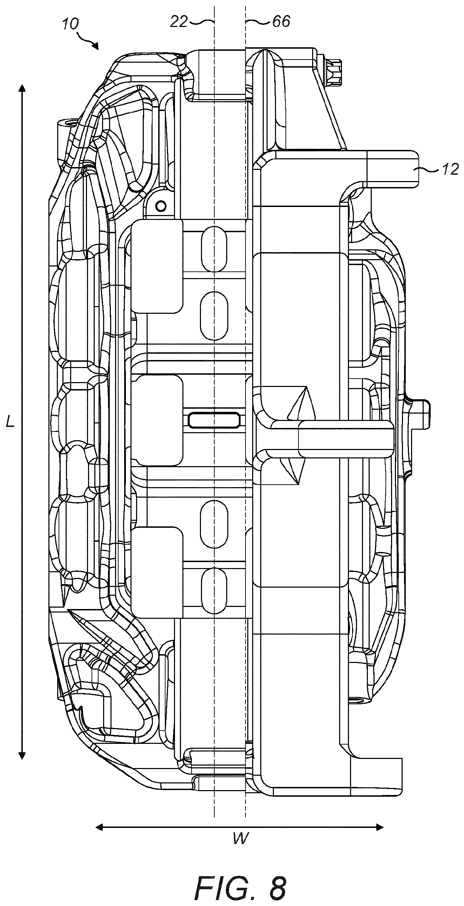

Figures 7 and 8 show a rear view (perspective and direct) of the caliper attached to the knuckle. It is apparent that the attachment interface between the knuckle and the caliper, indicated by line 66, is close to the mid-line 22 of the brake disc (noting that the brake disc is not shown on these figures). Generally, the interface between the knuckle and the caliper will be no more than half the width of the brake disc plus four millimeters from the brake disc mid-plane line. More preferably, the interface between the knuckle and the caliper will be no more than half the width of the brake disc plus two millimeters from the brake disc mid-plane line.

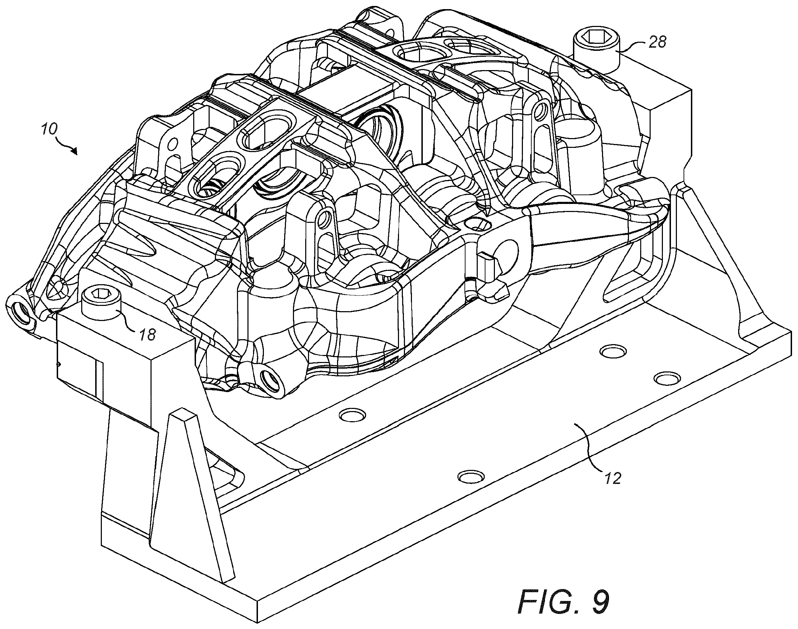

Figure 9 shows an alternative arrangement. This arrangement has mounting bolts perpendicular to the piston bore axes. The same fixed mounting for the leading end of the caliper and floating mounting for the trailing end are utilised. As with the embodiment shown in figure 6, the mountings are positioned on or close to the caliper / brake disc centerline.

It will be apparent from the figures, and shown clearly from figures 6 to 9 that in all embodiments the primary and secondary mounts 20, 28 are located at the ends of the central bridge section 14. This arrangement allows for the interface between the knuckle and the caliper to be as close as possible to the centre-line of the brake disc, and also allows for the mounting points 20, 28 to be positioned above the circumference of the brake disc.

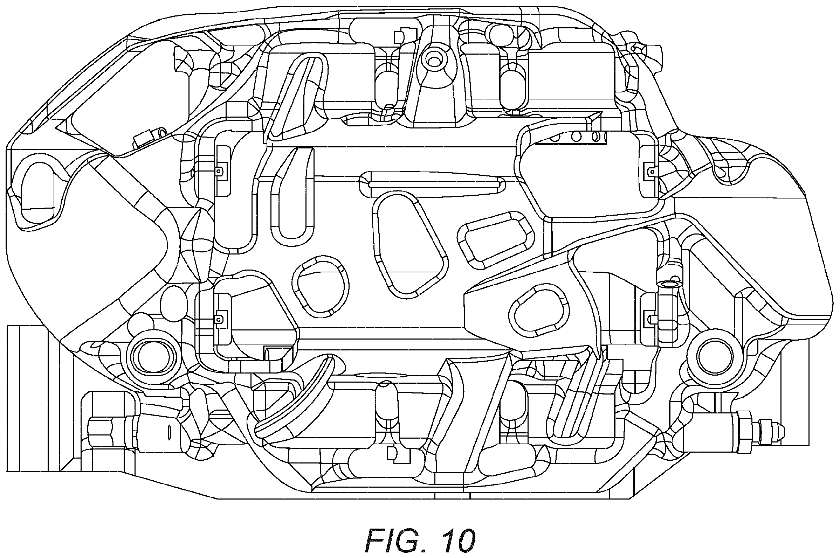

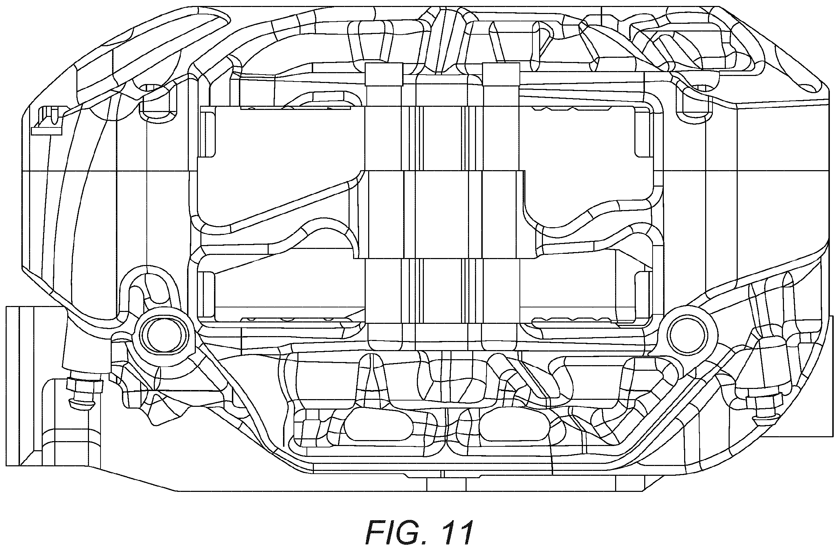

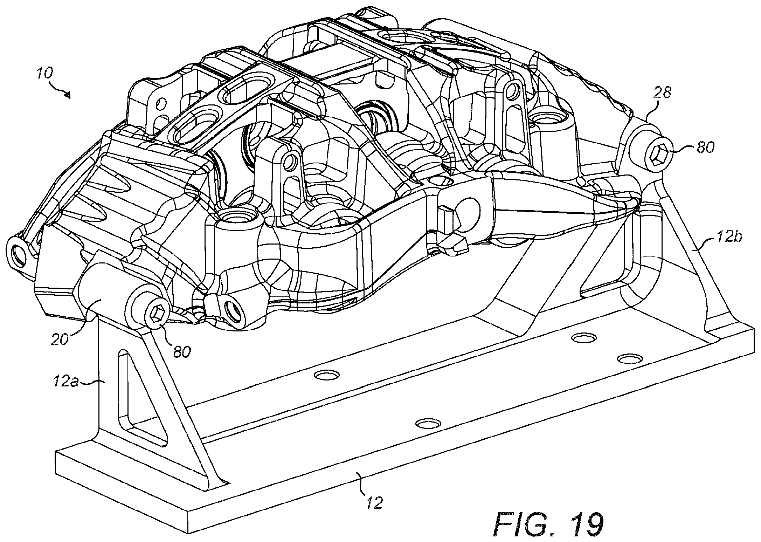

Figures 12 to 18 disclose a first detailed embodiment of a floating mount for the secondary mount, whilst figures 19 to 24 illustrate a second embodiment. Both of these arrangements may be utilized on the caliper arrangement of figures 1 to 11.

Specifically, figure 12 shows a perspective view of a brake caliper 10 mounted on a knuckle 12. As in figures 1 to 11, the caliper 10 comprises a central bridge section 14 which connects an inboard caliper section 16 and an outboard caliper section 18. The central bridge section 14 comprises a first mounting point 28 at one end thereof, and a second mounting point 20 at the other end. The knuckle 12 comprises a base and two support stantions 12a, 12b. The caliper 10 is mounted to the knuckle 12 via stantions 12a, 12b.

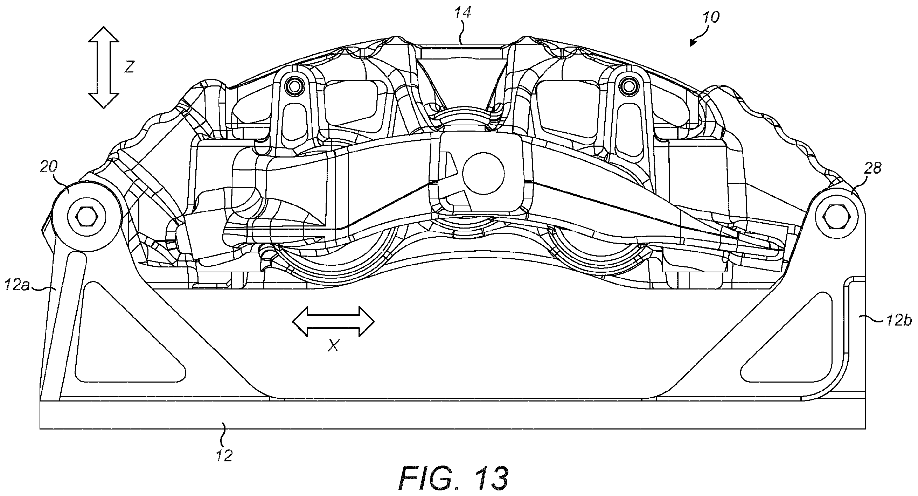

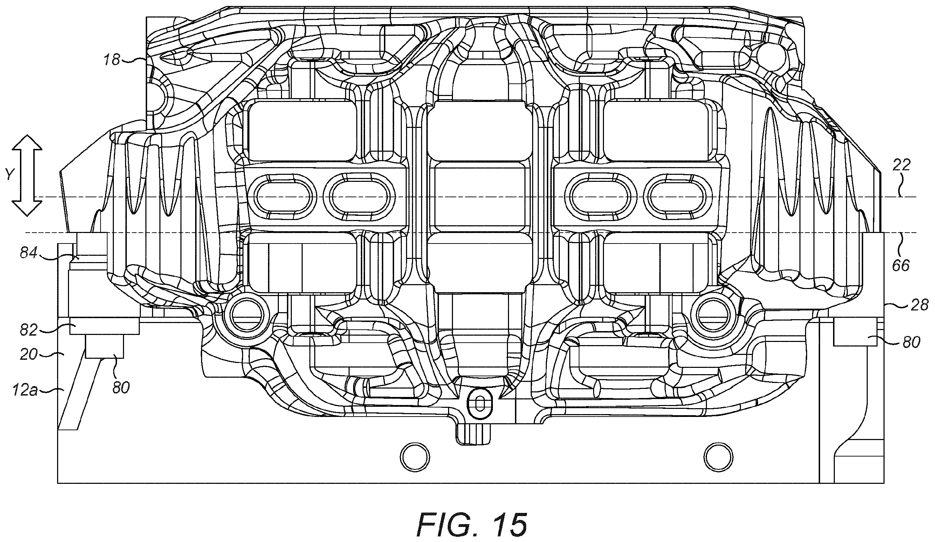

Figures 13, 14 and 15 show a side-on view, a front view and a top view, respectively. These three figures indicate an XYZ coordinate system. Specifically, when taken from the point of view of a wheel and brake disc, X is tangential, Y is axial and Z is radial). The secondary, trailing, mount 20 is restricted from movement in the Y and Z directions, but is partially unrestricted in the X direction. It will be apparent from figure 15 that the mounting interface plane 66 is close to the centre-line of the brake disc.

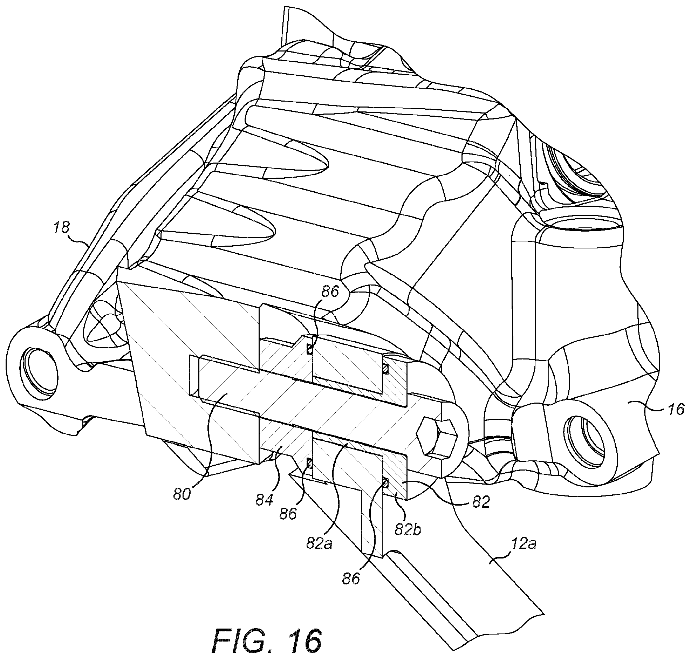

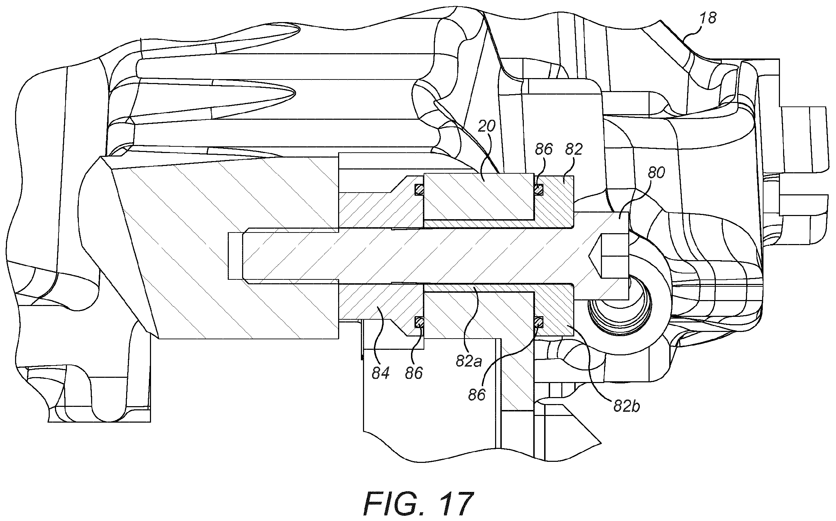

Figures 16 and 17 each show a cross-section of the secondary mount. Orthogonal directions, X, Y and Z referred to in figures 13 to 15 will be retained in relation to these figures. A bolt 80 is engaged with a bobbin 82. The bobbin 82 is typically mushroom-shaped, so as to have a body portion 82a and a flange 82b. The body portion 82a is mounted coaxially with the bolt 80. The body portion 82a and the bolt 80 are collectively passed through an elongate aperture in stantion 12a on knuckle 12. The bolt is engaged with the central caliper section via a screw fit. The flange 82b fits against an outer surface of the stantion 12a. A spacer 84 may be used to aid mounting.

The bobbin 82 and spacer 84 are typically fitted with seals 86 to militate against debris entering the secondary mount 20.

The bobbin is typically sized so as to fit through the aperture in the stantion 12a, and be flush with an inner surface thereof. As such, the spacer 84, inner surface of the stantion 12a and bobbin cooperate to have a close fit to allow the seals 86 in the spacer to engage with the inner surface of the stantion 12a. As the bolt and bobbin 82 are operable to slide in the X-direction, appropriate sliding clearance is provided between the bobbin 82 and stantion 12a.

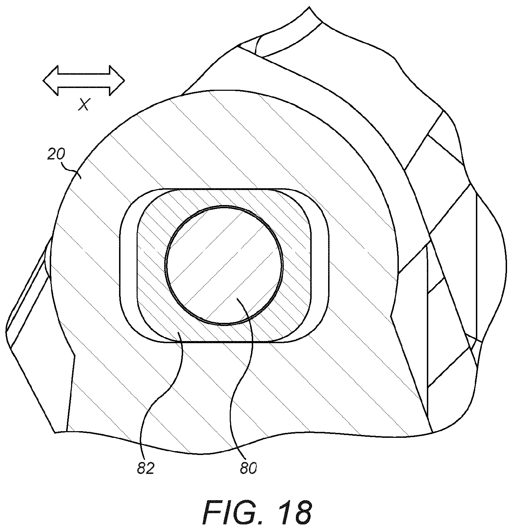

Figure 18 shows a cross-section through line x-x in figure 17. The elongate aperture allows for the secondary mount to flex in the X-direction (as defined in figures 13 to 15). The bobbin 82 engages with sliding clearance in the Z-direction.

The above embodiment is beneficial as a large amount of travel in the float direction (X direction) ensures high efficiency of the overall arrangement. The combination of a caliper-knuckle interface close to the brake disc centre-line and a floating secondary mount of this type efficiently balances the lift between the inboard and outboard caliper sections 16, 18, and ensures that piston articulation is kept within the critical angle.

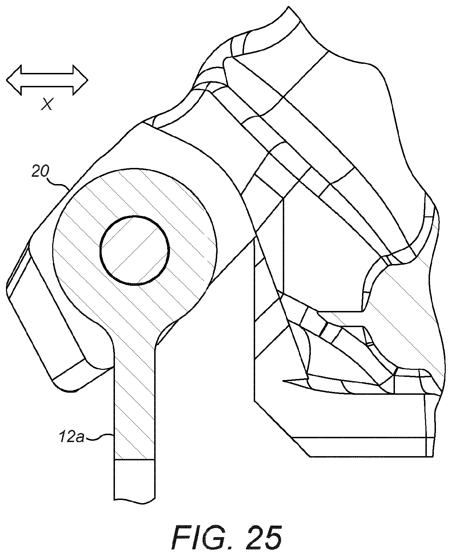

A second embodiment is shown in relation to figures 19 to 25. Specifically, figure 19 shows a caliper assembly 10 mounted to a knuckle 12 via two mounting brackets 12a, 12b. The arrangement comprises two mounting points: a primary mount 28 and a secondary mount 20. In this embodiment both the primary mount 28 and the secondary mount 20 are rigidly mounted via bolts 80. The mounting brackets 12a, 12b typically comprise circular apertures sized to receive the bolts that are then screw-fitted into the caliper 10.

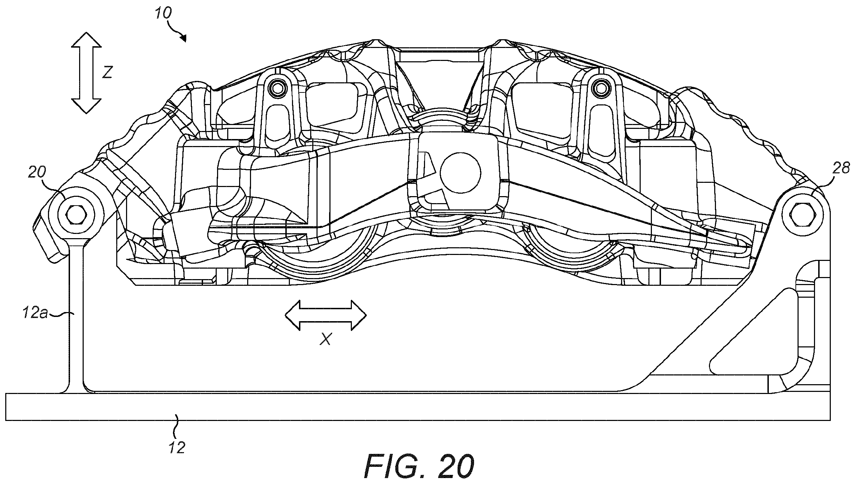

The arrangement of figure 19 is shown in orthogonal views in figures 20 to 22. The coordinate axis scheme used in earlier figures is carried through here.

Stantion 12a that comprises the secondary mount that couples the caliper to the knuckle 12 is operable to flex in the X direction (the direction of the primary axis of the caliper 10). Stantion 12a is rigid in both the Y and Z directions. The stantion is engineered to have a thickness and strength to provide a flexing in the X direction.

Stantion 12b, that comprises the primary mounting, is rigid is all directions.

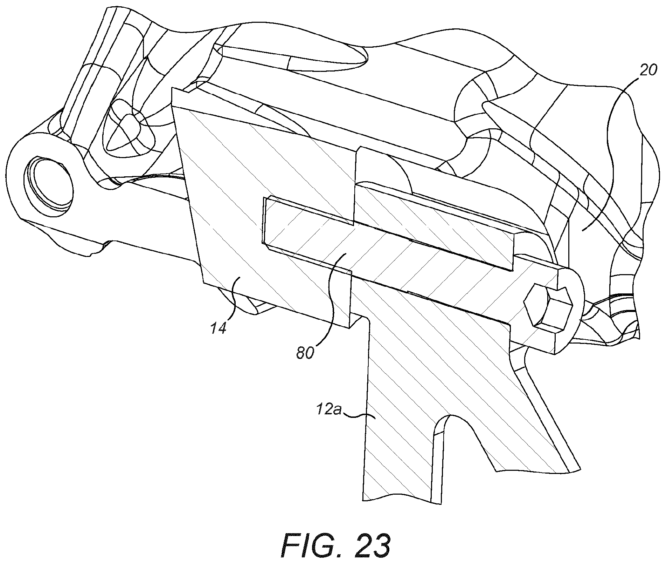

Figures 23 to 25 show details on the secondary mount, and should be compared to figures 16 to 18 of the first embodiment.

The second embodiment comprises a low component count and a straightforward construction, and hence is easily utilized. Servicing requirements are easily met, as there is no relative movement between the caliper 10 and the knuckle 12, and corrosion is of minimal concern.

In all embodiments, the knuckle may be manufactured from aluminium, or an alloy thereof. Steel may also be used.

The present arrangement thus provides for a brake caliper mounted via the central bridge section. The result is that the mounting interface between the knuckle and the caliper 10 is close to the centre-line of the disc. This arrangement contrasts to known caliper mounting points which are positioned in one half (typically the inboard section) of the caliper, close to the brake pistons. Mounting the brake caliper in accordance with the present invention provides a number of advancements over known arrangements. These advantages are particularly realised for performance or racing vehicles. Specifically, as the mounting interface is close to the disc centreline, the effective bending moment in the caliper is greatly reduced and therefore the relative movement of the two sides of the caliper is much reduced, when brake torque is applied. This reduction in relative movement maintains the shape of the caliper and improves efficiency. What movement that does occur may be maintained, for both caliper sides, to below a critical angle.

Combining the central mounting with a floating trailing mount enhances the result.

It will be appreciated that the following advantages result from the present arrangement:
1. Mounting close to the centre-line of the disc significantly reduces caliper 'lozenging';
2. Warping or 'lift' of caliper halves is balanced, meaning that any potential pad taper is even to both sides;
3. The present arrangement makes it much easier to ensure that the relationship between the pistons and brake disc surface are maintained within the critical angle. Specifically, balancing the lift between the two halves makes it much easier to keep the piston articulation within the critical angle;
4. Deflection, or 'lift' is easier to manage, and as such the central bridge section can be made less rigid, which offers weight saving advantages; and
5. Caliper mounting points can be linked directly to suspension links, which provides the most rigid structure for the entire corner.

The present arrangement finds application where lightweight opposed piston calipers are typically specified. This would typically include high performance road and race applications. The design principle could however be applied caliper used in other market areas, such as sports utility vehicles (SUVs). The mounting arrangement could also be applied to sliding calipers, used for more mainstream vehicles.

Figure 8 and 9 show two conventional brake caliper arrangements, which may be useful for understanding the present arrangement. It will be apparent that the mounting points are located on the inboard caliper section.

It will be appreciated that the above described embodiments are provided for understanding, and that many modifications and variations are possible within the scope of the claims.

## Claims

1. A braking system, comprising a support member (12), a brake disc defining a disc mid-plane line, and a brake caliper (10) comprising a bridge section (14), an inboard section (16) and an outboard section (18), wherein the brake caliper (10) is connected to the support member (12) such that the joint there-between is close to the brake disc mid-plane so as to balance warping between the inboard caliper section (16) and the outboard caliper section (18),
wherein the brake caliper (10) comprises two mounting points (20, 28) that are at either end of the bridge section (14), wherein a first is a leading mounting point (28), with respect to the forward direction of travel, and a secondary is a trailing mounting point (20), characterised that the secondary mounting point (20) comprises a floating link.

2. A braking system according to claim 1, wherein the warping is limited to below a critical angle.

3. A braking system according to claims 1 or 2, wherein the mounting points (20, 28) are aligned axially with respect to the brake disc.

4. A braking system according to claim 3, wherein the leading mounting point (28) is rigidly fixed.

5. A braking system according to any one of claims 3 or 4, wherein the mounting points (20, 28) are positioned beyond the outer circumference of the brake disc.

6. A braking system according to any one of claims 1 to 5, wherein the secondary mounting point (20) floats via relative movement between the caliper (10) and the support member (12).

7. A braking system according to claim 6, wherein the secondary mounting point (20) comprises an elongate aperture in which a mounting bolt may slide.

8. A braking system according to claim 7, wherein the mounting bolt engages the elongate aperture via a bobbin.

9. A braking system according to any one of claims 1 to 4, wherein the secondary mounting point (20) floats via flexing of part of the support member (12).

## Patentansprüche

1. Bremssystem, das ein Stützelement (12), eine Bremsscheibe, die eine Scheibenmittelebenenlinie definiert, und einen Bremssattel (10) umfasst, der einen Brückenteilabschnitt (14), einen innenliegenden Teilabschnitt (16) und einen außenliegenden Teilabschnitt (18) umfasst, wobei der Bremssattel (10) mit dem Stützelement (12) so verbunden ist, dass sich das Verbindungsstück dazwischen nahe bei der Bremsscheibenmittelebene befindet, um eine Verbiegung zwischen dem innenliegenden Sattelteilabschnitt (16) und dem außenliegenden Sattelteilabschnitt (18) auszugleichen,
wobei der Bremssattel (10) zwei Montagepunkte (20, 28) umfasst, die sich an beiden Enden des Brückenteilabschnitts (14) befinden, wobei ein erster ein vorderer Montagepunkt (28) mit Bezug auf die Vorwärtsbewegungsrichtung ist und ein sekundärer ein hinterer Montagepunkt (20) ist, **dadurch gekennzeichnet, dass** der sekundäre Montagepunkt (20) eine frei bewegliche Verbindung umfasst.

2. Bremssystem nach Anspruch 1, wobei die Verbiegung auf unter einen kritischen Winkel begrenzt ist.

3. Bremssystem nach Anspruch 1 oder 2, wobei die Montagepunkte (20, 28) mit Bezug auf die Bremsscheibe axial ausgerichtet sind.

4. Bremssystem nach Anspruch 3, wobei der vordere Montagepunkt (28) starr befestigt ist.

5. Bremssystem nach Anspruch 3 oder 4, wobei die Montagepunkte (20, 28) außerhalb des Außenumfangs der Bremsscheibe positioniert sind.

6. Bremssystem nach einem der Ansprüche 1 bis 5, wobei der sekundäre Montagepunkt (20) über eine relative Bewegung zwischen dem Sattel (10) und dem Stützelement (12) frei beweglich ist.

7. Bremssystem nach Anspruch 6, wobei der sekundäre Montagepunkt (20) eine längliche Öffnung umfasst, in der eine Montageschraube gleiten kann.

8. Bremssystem nach Anspruch 7, wobei die Montageschraube über einen Bolzen in die längliche Öffnung eingreift.

9. Bremssystem nach einem der Ansprüche 1 bis 4, wobei der sekundäre Montagepunkt (20) durch Biegen eines Teils des Stützelements (12) frei beweglich ist.

## Revendications

1. Système de freinage, comportant un élément de support (12), un disque de frein définissant une ligne de plan médian de disque, et un étrier de frein (10) comportant une section formant pont (14), une section intérieure (16) et une section extérieure (18), dans lequel l'étrier de frein (10) est relié à l'élément de support (12) de telle sorte que le joint entre eux est proche du plan médian du disque de frein de manière à équilibrer le gauchissement entre la section intérieure (16) de l'étrier et la section extérieure (18) de l'étrier,
dans lequel l'étrier de frein (10) comporte deux points de montage (20, 28) qui se situent à chaque extrémité de la section formant pont (14), dans lequel un premier point est un point de montage avant (28), par rapport à la direction de déplacement avant, et un point secondaire est un point de montage arrière (20), **caractérisé en ce que** le point de montage secondaire (20) comporte une bielle flottante.

2. Système de freinage selon la revendication 1, dans lequel le gauchissement est limité au-dessous d'un angle critique.

3. Système de freinage selon la revendication 1 ou la revendication 2, dans lequel les points de montage (20, 28) sont alignés axialement par rapport au disque de frein.

4. Système de freinage selon la revendication 3, dans lequel le point de montage avant (28) est fixé de manière rigide.

5. Système de freinage selon l'une quelconque des revendications 3 ou 4, dans lequel les points de montage (20, 28) sont positionnés au-delà de la circonférence extérieure du disque de frein.

6. Système de freinage selon l'une quelconque des revendications 1 à 5, dans lequel le point de montage secondaire (20) flotte sous l'effet d'un mouvement relatif entre l'étrier (10) et l'élément de support (12).

7. Système de freinage selon la revendication 6, dans lequel le point de montage secondaire (20) comporte une ouverture allongée dans laquelle un boulon de montage peut coulisser.

8. Système de freinage selon la revendication 7, dans lequel le boulon de montage se met en prise avec l'ouverture allongée par le biais d'une bobine.

9. Système de freinage selon l'une quelconque des revendications 1 à 4, dans lequel le point de montage secondaire (20) flotte sous l'effet de la flexion d'une partie de l'élément de support (12).
